# FASCICULE DE BREVET EUROPEEN

(11) **EP 2 203 389 B1**
(45) Date de publication et mention de la délivrance du brevet: **03.05.2017**
(21) Numéro de dépôt: 08840782.0
(22) Date de dépôt: 16.10.2008
(51) Int. Cl.: C02F 1/20, C02F 103/42, E04H 4/12, C02F 1/32, C02F 1/02

(54) **PROCEDE DE TRAITEMENT D'UNE EAU DE BASSIN D'UN ETABLISSEMENT DE BAINS COUVERT, ET INSTALLATION CORRESPONDANTE**
VERFAHREN ZUR BEHANDLUNG VON BECKENWASSER EINER ABGEDECKTEN BADVORRICHTUNG UND ENTSPRECHENDE ANLAGE
METHOD OF TREATING THE BASIN WATER OF A COVERED BATH ESTABLISHMENT, AND CORRESPONDING FACILITY

(30) Priorité: 16.10.2007 FR 0758354
(43) Date de publication de la demande: 07.07.2010
(73) Titulaire: Ecole Nationale De La Santé Publique, 35043 Rennes Cedex (FR)
(72) Inventeur: HAMEL, Hélène, F-35000 Rennes (FR); SEUX, René, F-35850 Romille (FR); CLEMENT, Michel, Rennes 35000 (FR)
(74) Mandataire: Vidon Brevets & Stratégie
(86) Numéro de dépôt international: PCT/EP2008/063987
(87) Numéro de publication internationale: WO 2009/050245

(56) Documents cités:
- EP-A- 0 107 583
- DE-A1- 1 792 557
- DE-A1- 10 138 384
- DE-A1- 19 814 705
- FR-A- 572 545
- US-B1- 6 461 862

## Description

### 1. Domaine de l'invention

Le domaine de l'invention est celui du traitement des eaux de bassin(s) d'établissements de bains couverts.

Plus précisément, l'invention concerne un procédé de traitement de telles eaux, en vue d'en abattre la teneur en composés volatils, issus de sa désinfection, notamment la trichloramine et/ou les trihalométhanes.

On entend par établissements de bains couverts, les espaces fermés au sein desquels il est possible de pratiquer des activités du type natation, balnéothérapie, thalassothérapie, spa, hammam, sauna...

On entend par eaux de bassins, les eaux qui sont utilisées pour la pratique de ce type d'activités et qui sont contenues dans des bassins tels que des piscines ou recueillies dans des bacs de récupération (par exemple dans le cas d'un hammam ou d'un sauna).

### 2. Art antérieur

Ces eaux de bassins, qui entrent en contact avec les individus qui s'adonnent au type d'activités listées ci-dessus, doivent être traitées en vue de leur assainissement.

Le traitement des eaux de piscines, par exemple, est habituellement réalisé de la façon suivante.

Au moins une partie de l'eau contenue dans la piscine est dirigée en continu vers un bac tampon dans lequel elle est mélangée avec de l'eau neuve.

L'eau contenue dans ce bac tampon est ensuite filtrée. Des injections dans l'eau d'agents désinfectants, tels que du chlore (sous forme d'hypochlorite de sodium, de chloroisocyanurate ou de chlore gazeux), sont ensuite pratiquées. Il peut également être injecté des produits de façon à ajuster la valeur du pH de l'eau. Après avoir subit ces étapes de traitement, l'eau traitée est réinjectée dans le bassin.

Les demandes de brevet FR572545 et DE19814705 décrivent des procédés et dispositifs pour le traitement des eaux de piscines. Les baigneurs apportent dans ces eaux diverses substances organo-azotées (sueur, urine, ...). Ces substances organo-azotées réagissent avec les agents désinfectants injectés dans l'eau pour former des sous-produits. Au rang des sous-produits de chloration figurent notamment les trihalométhanes et les chloramines dont la trichloramine.

Les chloramines minérales sont obtenues par substitutions successives d'un atome d'hydrogène de l'ammoniac (NH₃) (issu en grande partie de la dégradation de l'urée apportée par les baigneurs et dans une moindre mesure de la pollution directement apportée par les baigneurs) par un atome de chlore de l'acide hypochloreux (HOCl) (acide conjugué de l'hypochlorite ajouté dans les bassins pour désinfecter l'eau).

Une chaîne de réactions conduit à la formation de la trichloramine.

Dans un premier temps, on observe la formation de monochloramine selon la réaction suivante :

*HOCl* + *NH*₃ → *NH*₂*Cl* + *H*₂*O*

La monochloramine réagit ensuite pour former la dichloramine selon la réaction suivante :

*HOCl* + *NH*₂*Cl* → *NHCl*₂ + *H*₂*O*

Enfin, la dichloramine réagit selon la réaction suivante pour former la trichloramine :

*HOCl* + *NHCl*₂ → *NCl*₃ + *H*₂*O*

Plusieurs chloramines peuvent coexister en phase aqueuse et toutes les espèces sont en équilibre entre elles.

Les trihalométhanes sont obtenus par réaction du chlore sur les fonctions carbonées (aldéhydes ou cétones issus de la pollution apportée par les baigneurs), selon la réaction haloforme suivante :

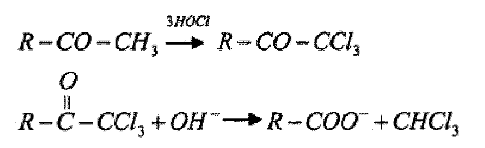

Du chloroforme (CHCl₃) est ainsi obtenu. En présence de bromure (naturellement présent dans l'eau), le chlore génère de l'acide hypobromeux (HOBr) qui réagit, au même titre que HOCl, pour donner des composés bromés tels que le bromodichlorométhane (CHBrCl₂), le dibromochlorométhane (CHBr₂Cl) et le bromoforme (CHBr₃). Ces quatre composés constituent les trihalométhanes (THM).

Ces composés (trihalométhanes, trichloramine) sont particulièrement volatils. Ainsi, ils ont tendance à se transférer vers l'atmosphère des piscines. Du fait que ces piscines prennent place dans des établissements de bains couverts, c'est-à-dire dans des espaces fermés, l'air contenu dans ces espaces est progressivement contaminé par ces composés volatils.

Le problème de la contamination de l'atmosphère des établissements de bains n'est pas limité aux seuls établissements accueillant une ou plusieurs piscines. Au contraire, ce type de problèmes se pose également dans la plupart des lieux confinés dans lesquels sont pratiquées des activités nécessitant l'utilisation d'eaux désinfectées, notamment la balnéothérapie, la thalassothérapie, le spa, le hammam, le sauna...

La présence de ce type de composés dans l'air est à l'origine de problèmes de santé tant chez les personnes qui s'adonnent à la pratique de telles activités, que chez le personnel de ces établissements.

Ces gênes sont le plus souvent liées à l'apparition de troubles respiratoires et d'irritations (yeux, nez, gorge).

Le décret n°2003-110 du 11 février 2003 a d'ailleurs reconnu, en France, les affections respiratoires liées à une exposition aux dérivés aminés des produits chlorés comme maladie professionnelle.

### 3. Inconvénients de l'art antérieur

Des techniques ont été proposées dans le but de réduire la pollution de l'atmosphère de ce type d'établissements de bains couverts.

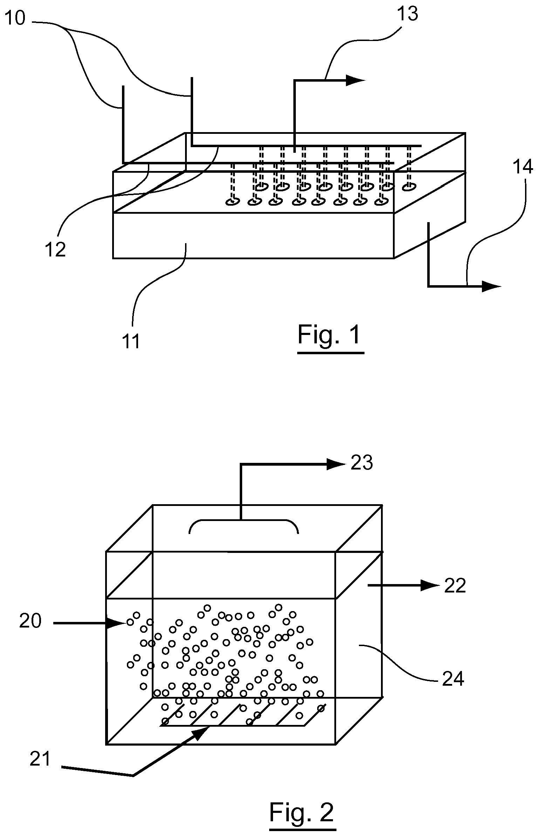

Une technique, illustrée à la figure 1, consiste à faire chuter une partie de l'eau 10 provenant de bassins dans un bac tampon 11, en la faisant circuler à travers des canalisations 12 présentant une pluralité d'orifices, puis à extraire 13 l'air chargé en sous-produits chlorés au niveau de cette zone tampon 11. L'eau de la zone tampon 11 est ensuite acheminée vers une zone de filtration 14 puis réinjectée dans les bassins.

Cette technique présente l'inconvénient de ne permettre d'abattre qu'environ 50% de la trichloramine contenue dans l'eau.

Une autre technique de l'art antérieur, illustrée à la figure 2, consiste à injecter de l'eau provenant de bassins 20 dans une zone tampon 24, à générer l'émission de bulles d'air 21 au fond de la zone tampon 24, puis à extraire l'air chargé en sous-produits chlorés 23 au niveau de la partie supérieure de la zone tampon 24 et à réinjecter l'eau 22 dans des bassins.

Cette technique présente l'inconvénient de ne permettre d'abattre que 60 à 70% de la trichloramine contenue dans l'eau. En outre, elle nécessite la mise en oeuvre de pompes puissantes, encombrantes et énergétivores, pour faire remonter l'air dans la zone tampon.

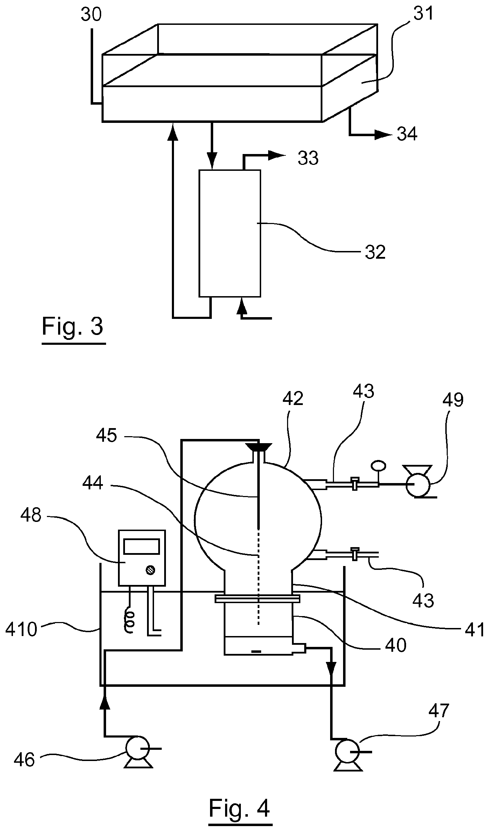

Une autre technique, illustrée à la figure 3, consiste à acheminer une partie de l'eau provenant de bassins 30 dans une zone tampon 31, à faire circuler une partie de l'eau de la zone tampon dans une tour de strippage 32. L'eau traitée est recyclée dans la zone tampon 31. L'air chargé en chloramines 33 est extrait de la tour de strippage 32. L'eau contenue dans la zone tampon est filtrée 34 puis réinjectée dans les bassins.L'utilisation d'une tour de strippage pour réduire la teneur en haloformes dans les eaux de piscines est connue de la demande de brevet EP0107583. Cette technique présente l'avantage de permettre, potentiellement, d'abattre une forte proportion de la trichloramine et des trihalométhanes contenus dans l'eau. Toutefois, le niveau d'abattement des composés dépend de la taille de la tour de strippage. En d'autres termes, l'obtention d'un abattement de ces composés de l'ordre de 90% nécessiterait la mise en oeuvre de tour de strippage d'une hauteur d'environ 10 mètres pour traiter un débit d'arrivée d'eau de bassins de l'ordre de 500 m³.h⁻¹. Cette technique est ainsi particulièrement difficile à mettre en oeuvre notamment du fait de son encombrement.

Dans ce contexte, il existe un besoin en solutions permettant de réduire la pollution de l'atmosphère des établissements de bains couverts par des composés volatils issus de la désinfection de l'eau, tels que la trichloramine et les trihalométhanes.

### 4. Objectifs de l'invention

L'invention a notamment pour objectif de pallier ces inconvénients de l'art antérieur.

Plus précisément, un objectif de l'invention est de fournir une technique de traitement d'eau de bassins d'établissements de bains couverts qui permet de limiter la pollution de l'atmosphère de tels établissements par des sous-produits de désinfection.

Notamment, un objectif de l'invention est de fournir une telle technique qui permet de réduire le transfert des trihalométhanes et de la trichloramine dans l'atmosphère des établissements de bains couverts.

Un autre objectif de l'invention est de mettre en oeuvre une telle technique qui soit simple et efficace.

Notamment, l'invention a pour objectif de fournir une telle technique qui ne nécessite pas, pour être mise en oeuvre, l'apport de modifications importantes au circuit existant de reprise d'eau des établissements de bains.

L'invention a encore pour objectif de fournir une telle technique qui soit fiable et dont la mise en oeuvre soit peu coûteuse.

### 5. Exposé de l'invention

Ces objectifs, ainsi que d'autres qui apparaîtront par la suite, sont atteints à l'aide d'un procédé de traitement d'une eau de bassin d'un établissement de bains couvert, en vue d'en abattre la teneur en composés volatils, ledit procédé comprenant une étape d'injection d'au moins une portion de ladite eau dudit bassin dans une zone tampon, une étape d'acheminement de ladite eau de ladite zone tampon vers une zone de filtration, une étape d'injection de l'eau filtrée dans ledit bassin.

Selon l'invention, un tel procédé comprend :
- une étape de chauffage à une température T, comprise entre 28 °C et 50°C, d'une portion d'eau extraite de ladite zone tampon ;
- une étape de pulvérisation de ladite eau chauffée à l'intérieur d'une enceinte au sein de laquelle est maintenue une pression P dont la valeur est comprise entre 1 mbar et 1 bar ;
- une étape d'extraction en continu de l'air contenu dans ladite enceinte ;
- une étape d'injection de l'eau provenant de ladite enceinte en amont de ladite zone de filtration.

Ainsi, l'invention repose sur une approche tout à fait originale du traitement des eaux de bassins d'établissements de bains couverts qui consiste à extraire les composés volatils contenus dans ces eaux, et à les acheminer vers l'extérieur de ces établissements de bains. Ceci permet d'éviter leur propagation dans l'atmosphère de ces lieux, et ainsi de contribuer à prévenir l'apparition de gênes chez les occupants de tels établissements.

Il a été constaté par la Déposante que la combinaison du chauffage d'une portion de l'eau du bassin ainsi que sa pulvérisation dans une enceinte à l'intérieur de laquelle circule de l'air de telle manière qu'il y règne une pression faible, permet de réduire dans de grandes proportions la quantité de composés volatils issus de la désinfection de l'eau contenus dans cette eau.

Ceci a pour effet de limiter le transfert de ces composés de l'eau vers l'atmosphère des établissements de bains couverts et par conséquent de réduire les gênes qu'ils sont habituellement susceptibles d'occasionner chez les occupants de ces établissements.

Il a été constaté que la combinaison de telles valeurs de pression et de température permettent d'obtenir un abattement des composés volatils contenus dans l'eau et notamment une diminution de la trichloramine comprise entre 85 et 97%. L'élimination de la trichloramine induit également l'abattement dans l'eau d'une partie des chloramines (mono- et dichloramine) en équilibre avec la trichloramine (jusqu'à 70%).

Selon une caractéristique préférée de l'invention, la valeur de ladite pression P est égale à 0,5 bar.

Selon une autre caractéristique préférée de l'invention, la valeur de ladite température T de chauffage est comprise entre 35°C et 40°C.

Il a été constaté par la Demanderesse que de telles valeurs de pression et de température permettent d'obtenir un abattement relativement élevé des composés volatils (trihalométhanes, trichloramine) contenus dans ces eaux.

Ainsi, la mise en oeuvre du procédé de traitement selon l'invention est particulièrement efficace pour abattre la teneur en trihalométhanes et en chloramines, dont la trichloramine, des eaux de bassins. Elle conduit ainsi à réduire la pollution de l'atmosphère des établissements de bains couverts par ces composés, et limite en conséquence l'apparition des troubles qu'ils sont susceptibles d'occasionner chez les utilisateurs et le personnel de ce type d'établissements.

Selon un aspect avantageux, le procédé de traitement selon l'invention comprend une étape d'irradiation aux UV de ladite eau chauffée préalablement à sa pulvérisation dans ladite enceinte.

Une telle étape d'irradiation aux UV permet d'accélérer la cinétique des réactions conduisant à la formation de la trichloramine et des trihalométhanes, avant leur élimination par le procédé.

Préférentiellement, la dose d'irradiation aux UV appliquée est environ égale à 60 mJ.cm⁻².

Il a été constaté qu'une telle dose permet d'obtenir une formation rapide de la trichloramine.

Selon un autre aspect préférentiel de l'invention, le procédé de traitement comprend une étape de traitement dudit air extrait de ladite enceinte préalablement à son rejet dans l'atmosphère.

La mise en oeuvre d'un tel traitement d'air peut notamment permettre de décomposer certains composés présents dans l'air et notamment la trichloramine.

Préférentiellement, ladite étape de traitement dudit air extrait comprend une étape de filtration sur charbon actif.

Une filtration de ce type permet de décomposer efficacement certains de ces composés présents dans l'air avant leur rejet à l'extérieur des établissements de bains.

L'invention concerne également une installation de traitement d'une eau de bassin d'un établissement de bains couvert pour la mise en oeuvre du procédé selon l'invention, l'installation comprenant une zone tampon susceptible de contenir une partie de l'eau provenant dudit bassin et des moyens de filtration de l'eau provenant de ladite zone tampon.

Selon l'invention, une telle installation comprend :
- des moyens de chauffage à une température T, comprise entre 28 °C et 50°C, d'une portion d'eau extraite de ladite zone tampon ;
- une enceinte susceptible de contenir de l'eau et de l'air ;
- des moyens de pulvérisation de ladite eau chauffée à l'intérieur de ladite enceinte ;
- des moyens de circulation d'air et de maintien d'une pression P comprise entre 1 mbar et 1 bar, au sein de ladite enceinte ;
- des moyens d'extraction dudit air contenu dans ladite enceinte ;
- des moyens d'injection d'une eau provenant de ladite enceinte en amont des moyens de filtration.

Une installation de traitement selon l'invention comprend avantageusement des moyens d'irradiation aux UV de ladite eau chauffée.

Préférentiellement, une installation de traitement selon l'invention comprend des moyens de traitement dudit air extrait, lesdits moyens de traitement comprenant un filtre au charbon actif.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une représentation schématique d'une technique de traitement d'eau de bassin, selon l'art antérieur, par mise en chute libre de l'eau dans un bac tampon ;
- la figure 2 illustre une représentation d'une autre technique de traitement d'eau de bassin, selon l'art antérieur, par injection de bulles d'air dans l'eau ;
- la figure 3 illustre une représentation schématique d'une autre technique de traitement d'eau de bassin, selon l'art antérieur, qui consiste à faire transiter l'eau dans une tour de strippage ;
- la figure 4 représente un schéma d'une installation de laboratoire qui a été utilisée pour la mise au point du procédé de traitement selon l'invention ;
- la figure 5 est un schéma illustrant la mise en oeuvre du procédé selon l'invention au sein d'un établissement de bains couvert ;
- la figure 6 est un schéma illustrant une installation pour la mise en oeuvre du procédé selon l'invention au sein d'un tel établissement.

### 7. Description d'un mode de réalisation de l'invention

### 7.1. Rappel du principe de l'invention

De façon classique, le traitement des eaux de bassins des établissements de bains couverts consiste à faire transiter au moins une portion des eaux provenant de ces bassins dans un bac tampon dans lequel ces eaux sont mélangées avec de l'eau neuve. Ce mélange est ensuite filtré, désinfecté, la valeur de son pH est ajustée, avant qu'il soit injecté dans les bassins.

Le principe de l'invention consiste à réchauffer une partie de l'eau du bac tampon à une température T comprise entre 28 °C et 50°C, puis à la pulvériser dans une enceinte dans laquelle est maintenue une pression P comprise entre 1 mbar et 1 bar. La borne inférieure de l'intervalle de la température T de l'eau correspond à la température de l'eau admise dans le bac tampon. L'air contenu dans l'enceinte est extrait en continu.

La combinaison du réchauffage de l'eau à une température T et de son passage dans une enceinte où règne une faible pression P, permet d'abattre relativement fortement la concentration en sous-produits de désinfection contenus dans l'eau. En effet, sous l'effet du chauffage et de la faible pression au sein de l'enceinte, les composés particulièrement volatils composant ces sous-produits, notamment la trichloramine et les trihalométhanes, se volatilisent dans l'air contenu dans l'enceinte, de sorte qu'ils sont extraits de l'eau.

L'eau traitée réinjectée dans les bassins est ainsi pauvre en composés volatils provenant de la désinfection de l'eau. En conséquence, l'atmosphère des établissements de bains couverts au sein desquels est mise en oeuvre l'invention est suffisamment peu polluée par ce type de composés pour que leur présence n'engendre pas de gênes chez les occupants de tels établissements.

### 7.2. Exemple d'une installation de laboratoire mise en oeuvre pour la mise au point du procédé selon l'invention

On présente, en relation avec la figure 4, un exemple d'installation de laboratoire qui a été mise en oeuvre pour la mise au point du procédé de traitement selon l'invention.

Tel que cela est illustré, une telle installation comprend un réservoir 40 de forme essentiellement cylindrique contenant de l'eau. Ce réservoir 40 présente un volume de 700 mL. L'eau contenue dans ce réservoir 40 est maintenue à une température de 37°C, en étant plongée dans un bain thermostaté 410 grâce à la mise en oeuvre de moyens de chauffage 48, comprenant par exemple une résistance.

Le col 41 d'une enceinte 42 essentiellement sphérique présentant un volume de 5 litres surmonte le réservoir 40.

Deux orifices 43 permettent de faire circuler de l'air à l'intérieur de l'enceinte 42. Le renouvellement de l'air dans l'enceinte 42 est obtenu par la mise en oeuvre d'une pompe à jet d'eau 49. Le débit de renouvellement de l'air à l'intérieur de l'enceinte 42 est de 1 L.min⁻¹. La dépression à l'intérieur de cette enceinte 42 est maintenue à 0,5 bar par la mise en oeuvre de vannes placées au niveau des orifices 43.

Une solution de trichloramine de synthèse, composée d'un mélange d'eau de Javel et de sulfate d'ammonium dans un tampon de phosphate à pH 7, et de concentration égale à 3,0.10⁻⁵ mol/L, est injectée sous forme de pluie 44 dans l'enceinte 42 à un débit constant de 12,5 mL.min⁻¹, au moyen d'un diffuseur 45 et d'une pompe 46.

Au cours de la chute de cette pluie dans l'enceinte 42, la trichloramine contenue dans l'eau se volatilise dans l'air.

L'air chargé en trichloramine est extrait de l'enceinte 42 en continu par le renouvellement de l'air qu'elle contient.

L'eau traitée s'écoule au fond de l'enceinte 42 et est recueillie au moyen d'une pompe 47. La concentration en trichloramine de cette eau traitée est de 2,8.10⁻⁶ mol/L.

La mise en oeuvre de l'invention permet donc d'abattre 91% de la concentration de trichloramine initialement contenue dans l'eau. Plus largement, les teneurs en chloramines dans l'eau sont réduites de 70%.

Des essais comparatifs ont permis de montrer que le rendement d'élimination de la trichloramine par la mise en oeuvre du procédé selon l'invention était augmenté d'environ 40% par rapport à un procédé classique dans lequel les conditions de pression dans l'enceinte et de température de l'eau sont respectivement de 1 bar et 25°C.

### 7.3. Exemple d'une installation pour la mise en oeuvre du procédé selon l'invention dans un site réel

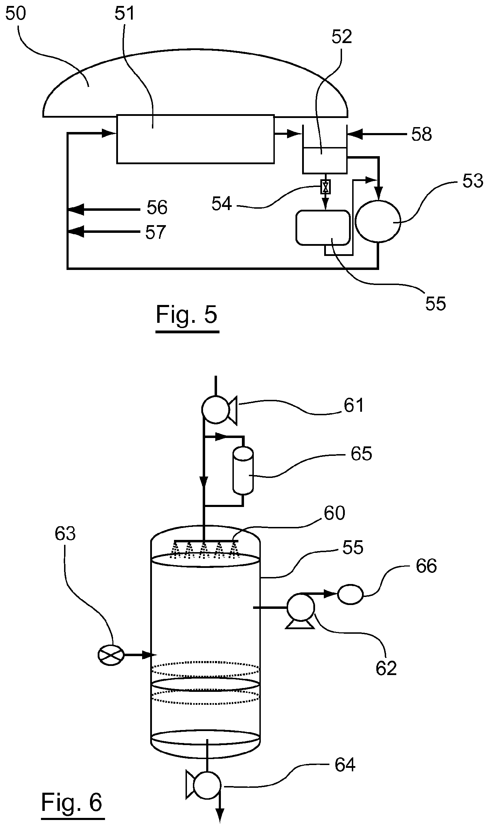

On présente, en relation avec les figures 5 et 6, un exemple d'une installation pour la mise en oeuvre du procédé de traitement selon l'invention dans un site réel.

Tel que cela est représenté sur la figure 5, un établissement de bains couvert présente un espace fermé 50 dans lequel est logé un bassin 51.

L'installation mise en oeuvre pour le traitement de l'eau contenue dans ce bassin 51 comprend classiquement un bac tampon 52. Ce bac tampon 52 est alimenté en eau provenant du bassin 51 à un débit égal à 200 m³.h⁻¹. De l'eau neuve 58 est introduite dans le bac tampon 52 en continu.

L'eau contenue dans le bac tampon 52 est acheminée vers des moyens de filtration 53 avant d'être réinjectée dans le bassin 51.

Ces moyens de filtration 53 mis en oeuvre sont connus de l'homme du métier. Ils ne sont pas décrits plus en détails ici. Il peut par exemple s'agir de filtre à sable, de média filtrant,...

Au moins une partie de l'eau contenue dans le bac tampon 52 en est extraite. Dans le présent mode de réalisation, la proportion d'eau extraite du bac tampon est d'environ 40%, ce qui représente un débit égal à 80 m³.h⁻¹.

Ce débit d'eau extrait est chauffé par la mise en oeuvre de moyens de chauffage 54, comprenant par exemple des résistances. Dans ce mode de réalisation, cette eau est chauffée à une température égale à 35°C.

Après avoir été chauffée, l'eau est injectée dans une enceinte 55. Cette enceinte 55 est plus clairement représentée sur la figure 6.

Tel que cela est représenté sur cette figure 6, l'eau est injectée dans l'enceinte 55 sous la forme d'une pluie par la mise en oeuvre de moyens de diffusion comprenant un diffuseur 60 et d'une pompe 61.

Le volume de l'enceinte 55, de forme essentiellement cylindrique, est égal à 3,3 m³. Sa section est égale à 1,33 m² et sa hauteur est égale à 2,5 m.

L'air à l'intérieur de l'enceinte 55 est continuellement renouvelé au moyen d'une pompe 62. La pression P de l'air à l'intérieur de cette enceinte 55 est maintenue à 0,5 bar par la mise en oeuvre d'une vanne 63.

De par les conditions de température et de pression, les composés volatils provenant de la désinfection de l'eau, en particulier la trichloramine et les trihalométhanes, se volatilisent à l'intérieur de l'enceinte 55 et en sont extraits au cours du renouvellement de l'air qu'elle contient.

L'air notamment chargé en trichloramine et en trihalométhanes est évacué à l'extérieur de l'établissement en empruntant le circuit d'évacuation de l'air issu du bac tampon 52.

L'eau traitée exempte, à tout le moins en partie, de ces composés est recueillie au fond de l'enceinte 55, puis est réinjectée, au moyen d'une pompe 64, dans le circuit de recyclage classique en amont des moyens de filtration 53.

Le mélange d'eau traitée et d'eau provenant du bac tampon 52 est ensuite filtré puis réinjecté dans le bassin 51.

Des injections dans l'eau traitée et filtrée de chlore 56 et d'ajusteur de pH 57 peuvent être pratiquées avant sa réinjection dans le bassin 51.

Dans une variante de ce mode de réalisation, l'eau chauffée est préalablement irradiée par la mise en oeuvre de moyens 65 d'irradiation aux UV. Ces moyens d'irradiation comprennent avantageusement une ou plusieurs lampes UV conçues pour appliquer une dose environ égale à 60 mJ.cm⁻².

L'irradiation de l'eau préalablement à son injection dans l'enceinte favorise la cinétique des réactions conduisant à la formation de la trichloramine et des trihalométhanes, avant leur élimination dans l'enceinte.

Dans une autre variante de ce mode de réalisation, des moyens de filtration 66 permettent le traitement de l'air extrait de l'enceinte 55. Ces moyens de filtration 66 peuvent comprendre un filtre au charbon actif qui peut être placé sur le conduit d'évacuation de l'air de façon à décomposer la trichloramine présente dans l'air avant son rejet à l'extérieur.

### 7.4. Avantages du procédé selon l'invention

La mise en oeuvre du procédé selon l'invention permet d'abattre la concentration de l'eau des sous-produits de chloration tels que les trihalométhanes et les chloramines dont la trichloramine. Elle conduit de ce fait à éliminer, ou à tout le moins à réduire fortement, la pollution par ces composés volatils de l'atmosphère des établissements de bains couverts.

Les avantages procurés par la mise en oeuvre du procédé selon l'invention ne se limitent pas à ceux qui sont rappelés plus hauts. Au contraire, sa mise en oeuvre présente d'autres avantages.

Notamment, la mise en oeuvre du procédé selon l'invention ne requiert pas de modifier le circuit classique de reprise des eaux de bassins. Ce procédé peut donc être facilement mis en oeuvre au sein de structures existantes.

En outre, la mise en oeuvre de ce procédé n'engendre pas de modification chimique de l'eau.

La mise en oeuvre de l'invention est également avantageuse sur le plan énergétique. En effet, la température de l'eau contenue dans les bassins est maintenue à une température de confort de 27°C environ. La quantité de chaleur nécessaire au chauffage de la fraction d'eau traitée dans l'enceinte à une température supérieure à 27°C est donc restituée à l'eau des bassins afin de la maintenir à cette température de confort. Le chauffage de cette fraction d'eau n'engendre donc pas de consommation supplémentaire en énergie.

## Revendications

1. Procédé de traitement d'une eau de bassin (51) d'un établissement de bains couvert, en vue d'en abattre la teneur en composés volatils, ledit procédé comprenant une étape d'injection d'au moins une portion de ladite eau dudit bassin (51) dans une zone tampon (52), une étape d'acheminement de ladite eau de ladite zone tampon (52) vers une zone de filtration (53), une étape d'injection de l'eau filtrée dans ledit bassin (51),
**caractérisé en ce qu'**il comprend
- une étape de chauffage (54) à une température T, comprise entre 28 °C et 50°C, d'une portion d'eau extraite de ladite zone tampon (52) ;
- une étape de pulvérisation (60) de ladite eau chauffée à l'intérieur d'une enceinte (55) au sein de laquelle est maintenue une pression P dont la valeur est comprise entre 1 mbar et 1 bar ;
- une étape d'extraction en continu de l'air contenu dans ladite enceinte (55) ;
- une étape d'injection de l'eau provenant de ladite enceinte (55) en amont de ladite zone de filtration (53).

2. Procédé de traitement d'eau selon la revendication 1, **caractérisé en ce que** la valeur de ladite pression P est égale à 0,5 bar.

3. Procédé de traitement d'eau selon l'une quelconque des revendications 1 et 2, **caractérisé en ce que** la valeur de ladite température T est comprise entre 35°C et 40°C.

4. Procédé de traitement d'eau selon l'une quelconque des revendications 1 à 3, **caractérisé en ce qu'**il comprend une étape d'irradiation aux UV de ladite eau chauffée préalablement à sa pulvérisation dans ladite enceinte (55).

5. Procédé de traitement selon la revendication 4, **caractérisé en ce que** la dose d'irradiation aux UV appliquée est environ égale à 60 mJ.cm⁻².

6. Procédé de traitement d'eau selon l'une quelconque des revendications 1 à 5, **caractérisé en ce qu'**il comprend une étape de traitement dudit air extrait de ladite enceinte (55) préalablement à son rejet dans l'atmosphère.

7. Procédé de traitement d'eau selon la revendication 6, **caractérisé en ce que** ladite étape de traitement dudit air extrait comprend une étape de filtration sur charbon actif.

8. Installation de traitement d'une eau de bassin (51) d'un établissement de bains couvert pour la mise en oeuvre du procédé selon l'une quelconque des revendications 1 à 7, ladite installation comprenant une zone tampon (52) susceptible de contenir une partie de l'eau provenant dudit bassin (51) et des moyens de filtration (53) de l'eau provenant de ladite zone tampon (52), **caractérisé en ce qu'**elle comprend :
- des moyens de chauffage (54) à une température T, comprise entre 28 °C et 50°C, d'une portion d'eau extraite de ladite zone tampon (52) ;
- une enceinte (55) susceptible de contenir de l'eau et de l'air ;
- des moyens de pulvérisation (60) de ladite eau chauffée à l'intérieur de ladite enceinte (55) ;
- des moyens de circulation d'air (62) et de maintien (63) d'une pression P comprise entre 1 mbar et 1 bar, au sein de ladite enceinte (55) ;
- des moyens d'extraction (62) dudit air contenu dans ladite enceinte (55) ;
- des moyens d'injection (64) d'une eau provenant de ladite enceinte (55) en amont des moyens de filtration (53).

9. Installation de traitement selon la revendication 8, **caractérisée en ce qu'**elle comprend des moyens d'irradiation aux UV (65) de ladite eau chauffée.

10. Installation de traitement selon l'une quelconque des revendications 8 et 9, **caractérisée en ce qu'**elle comprend des moyens de traitement (66) dudit air extrait, lesdits moyens de traitement comprenant un filtre au charbon actif.

## Patentansprüche

1. Verfahren des Verarbeitens von Wasser eines Beckens (51) einer überdachten Badeanstalt, um dessen Gehalt an flüchtigen Stoffen zu verringern, wobei das Verfahren einen Schritt des Einspritzens wenigstens eines Teils des Wassers des Beckens (51) in eine Pufferzone (52), einen Schritt des Förderns des Wassers der Pufferzone (52) in Richtung einer Filterzone (53) und einem Schritt des Einspritzens des gefilterten Wassers in das Becken (51) aufweist,
**dadurch gekennzeichnet, dass** es aufweist:
- einen Schritt des Erhitzens (54) auf eine Temperatur T, die zwischen 28°C und 50°C enthalten ist, eines Teils von aus der Pufferzone (52) entnommenem Wasser;
- einen Schritt des Zerstäubens (60) des erhitzten Wassers im Inneren eines Gehäuses (55), innerhalb dessen ein Druck P aufrechterhalten wird, dessen Wert zwischen 1 mbar und 1 bar enthalten ist;
- einen Schritt der kontinuierlichen Extraktion von in dem Gehäuse (55) enthaltener Luft;
- einen Schritt des Einspritzens von Wasser, das aus dem Gehäuse (55) stammt, stromaufwärts der Filterzone (53).

2. Verfahren des Verarbeitens von Wasser nach Anspruch 1, **dadurch gekennzeichnet, dass** der Wert des Druckes P gleich 0,5 bar ist.

3. Verfahren des Verarbeitens von Wasser nach einem der Ansprüche 1 und 2, **dadurch gekennzeichnet, dass** der Wert der Temperatur T zwischen 35°C und 40°C enthalten ist.

4. Verfahren des Verarbeitens von Wasser nach einem der Ansprüche 1 bis 3, **dadurch gekennzeichnet, dass** es einen Schritt des Bestrahlens mit UV des erhitzten Wassers vor seiner Zerstäubung in dem Gehäuse (55) aufweist.

5. Verfahren des Verarbeitens nach Anspruch 4, **dadurch gekennzeichnet, dass** die angewandte UV-Strahlungsdosis in etwa gleich 60 mJ/cm² ist.

6. Verfahren des Verarbeitens von Wasser nach einem der Ansprüche 1 bis 5, **dadurch gekennzeichnet, dass** es einen Schritt des Verarbeitens der aus dem Gehäuse (55) extrahierten Luft vor deren Ausstoß in die Atmosphäre aufweist.

7. Verfahren des Verarbeitens von Wasser nach Anspruch 6, **dadurch gekennzeichnet, dass** der Schritt des Verarbeitens der extrahierten Luft einen Schritt des Filterns auf Aktivkohle aufweist.

8. Anlage zum Verarbeiten von Wasser eines Beckens (51) einer überdachten Badeanstalt zum Ausführen des Verfahrens nach einem der Ansprüche 1 bis 7, wobei die Anlage eine Pufferzone (52), die geeignet ist, einen Teil des aus dem Becken (51) stammenden Wassers aufzunehmen, und Mittel zum Filtern (53) des aus der Pufferzone (52) stammenden Wassers aufweist, **dadurch gekennzeichnet, dass** sie aufweist:
- Mittel zum Erhitzen (54) auf eine Temperatur T, die zwischen 28°C und 50°C enthalten ist, eines Teils von aus der Pufferzone (52) entnommenem Wasser;
- ein Gehäuse (55), das geeignet ist, Wasser und Luft zu enthalten;
- Mittel zum Zerstäuben (60) des erhitzten Wassers im Inneren des Gehäuses (55);
- Mittel zum Zirkulieren von Luft (62) und zum Aufrechterhalten (63) eines Druckes P, der zwischen 1 mbar und 1 bar enthalten ist, innerhalb des Gehäuses (55);
- Mittel zum Extrahieren (62) der in dem Gehäuse (55) enthaltenen Luft;
- Mittel zum Injizieren (64) eines Wassers, das aus dem Gehäuse (55) stammt, flussaufwärts der Mittel zum Filtern (53).

9. Anlagen zum Verarbeiten nach Anspruch 8, **dadurch gekennzeichnet, dass** sie Mittel zum Bestrahlen mit UV (65) des erhitzten Wassers aufweist.

10. Anlage zum Verarbeiten nach einem der Ansprüche 8 und 9, **dadurch gekennzeichnet, dass** sie Mittel zum Verarbeiten (66) der extrahierten Luft aufweist, wobei die Mittel zum Verarbeiten einen Aktivkohlefilter aufweisen.

## Claims

1. Method of treating the basin water (51) of a covered bath establishment, for abatement of the volatile compounds contained therein, said method comprising a step of injecting at least a portion of said water from said basin (51) into a buffer zone (52), a step of conveying said water from said buffer zone (52) to a filtration zone (53), a step of injecting the filtered water into said basin (51),
**characterised in that** it comprises
- a heating step (54), in which a portion of water extracted from said buffer zone (52) is heated to a temperature T between 28°C and 50°C;
- a spraying step (60), in which said heated water is sprayed into a chamber (55) within which a pressure P is maintained, said pressure being between 1 mbar and 1 bar;
- a continuous extraction step for extracting the air contained in said chamber (55);
- an injection step for injecting the water coming from said chamber (55) upstream of said filtration zone (53).

2. Method of treating water according to Claim 1, **characterised in that** the value of said pressure P is equal to 0.5 bar.

3. Method of treating water according to any one of Claims 1 and 2, **characterised in that** the value of said temperature T is between 35°C and 40°C.

4. Method of treating water according to any one of Claims 1 to 3, **characterised in that** it comprises a UV irradiation step for irradiating said water heated prior to it being sprayed in said chamber (55).

5. Method of treating water according to Claim 4, **characterised in that** the UV irradiation dose applied is approximately equal to 60 mJ.cm⁻².

6. Method of treating water according to any one of Claims 1 to 5, **characterised in that** it comprises a treatment step for treating said air extracted from said chamber (55) prior to it being discharged into the atmosphere.

7. Method of treating water according to Claim 6, **characterised in that** said treatment step for treating said extracted air comprises a filtration step for filtering on activated charcoal.

8. Installation for treating the basin water (51) of a covered bath establishment for implementing the method according to any one of Claims 1 to 7, said installation comprising a buffer zone (52) designed to contain a part of the water coming from said basin (51) and filtration means (53) for filtering the water coming from said buffer zone (52), **characterised in that** it comprises:
- means for heating (54) to a temperature T, comprised between 28°C and 50°C, of a portion of water extracted from said buffer zone (52);
- a chamber (55) designed to contain water and air;
- means for spraying (60) said heated water inside said chamber (55);
- means for circulating air (62) and for maintaining (63) a pressure P of between 1 mbar and 1 bar, within said chamber (55);
- means for extracting (62) said air contained in said chamber (55);
- means for injecting (64) water coming from said chamber (55) upstream of the filtration means (53).

9. Treatment installation according to Claim 8, **characterised in that** it comprises means for UV irradiation (65) of said heated water.

10. Treatment installation according to any one of Claims 8 and 9, **characterised in that** it comprises means for treating (66) said extracted air, said treatment means comprising an activated charcoal filter.
